Europäisches Patentamt

European Patent Office

Office européen des brevets

(19)

(11) **EP 1 650 255 A1**

(12) **EUROPEAN PATENT APPLICATION**

(43) Date of publication:
  **26.04.2006 Bulletin 2006/17**

(51) Int Cl.:
  *C08J 9/00* (2006.01)

(21) Application number: **04024833.8**

(22) Date of filing: **19.10.2004**

(84) Designated Contracting States:
  **AT BE BG CH CY CZ DE DK EE ES FI FR GB GR
  HU IE IT LI LU MC NL PL PT RO SE SI SK TR**
  Designated Extension States:
  **AL HR LT LV MK**

(71) Applicants:
  • **Arkema
    92800 Puteaux (FR)**
  • **Alveo AG
    6002 Luzern (CH)**

(72) Inventors:
  • **Willemse, Remco
    6400 Da Weert (NL)**

  • **Dabbous, Raphael
    6300 Zug (CH)**
  • **Fasola, Armin
    6006 Luzern (CH)**
  • **Lacroix, Christophe
    27700 Harquency (FR)**
  • **Mauger, Muriel
    27000 Evreux (FR)**

(74) Representative: **Neel, Henry
  ARKEMA
  Département Propriété Industrielle,
  4-8, cours Michelet
  La Défense 10
  92091 Paris La Défense Cedex (FR)**

(54) **Polyether block amide foam**

(57)  The present invention concerns a crosslinked foam of a copolymer having polyamide blocks and polyether blocks and a density from 20 to 700 kg/m3.

Density is measured according to Method ISO 845. Advantageously the density is from 70 kg/m3 to 400 kg/m3.

Advantageously the cell size is from 0.05 to 2.0 mm, preferably from 0.1 mm to 1.0 mm. Advantageously the cells are closed. Preferably the foam does not undergo any further mechanical or thermal treatment.

This foam has many advantages and specific features:

The compressive strength is from 90 to 170 kPa, preferably from 110 to 150 kPa (measured on foam of 240 kg/m3, at 25% deflection, method according to ISO 844).

The shore hardness O is from 20 to 34, preferably from 23 to 32 (measured on foam of 240 kg/m3, internal method).

The thermal conductivity is from 0.038 to 0.058 W/m°K, preferably from 0.043 to 0.053 W/m°K (measured on foam of 240 kg/m3, method according to ISO 2581) The energy return is 28 to 40 cm, preferably 31 to 37 cm (measured on foam of 240 kg/m3, method according to ISO 8307).

The water vapour transmission is 500 to 10000 g/m2/day, preferably 1000 to 3500 g/m2/day (measured on foam of 240 kg/m3, 2.5 mm thickness, method according to ASTM E96 BW) provided there are enough hydrophilic polyether blocks.

EP 1 650 255 A1

## Description

[Field of the invention]

The present invention concerns a polyether block amide foam and more precisely a foam made from a copolymer having polyamide blocks and polyether blocks. The properties of said foam are, among others, low compression strength, low dynamic shear modulus, and high water vapour transmission. Such properties are unique to a closed-cell foam.

[Prior art and technical problem]

The patent **US 3711584** describes a process and apparatus for producing a wrinkle-free, highly foamed sheet of an ethylenic resin having a uniform and fine cellular structure by causing a long strip of a sheet-like molded article of a cross-linked ethylenic resin containing a normally solid organic blowing agent to fall downwardly and continuously transferring it in the falling direction, heating the sheet-like molded article in transit to a foaming temperature, the heating being controlled so that a starting position of foaming along the widthwise direction of the sheet-like article will not appreciably fluctuate upwards or downwards and extending the foamed sheet-like article in the widthwise direction.

The purpose of Japanese patent application **JP 56111658** is obtain a foamy body having an excellent cushion quality and a rebounding elasticity with a small quantity of raw material by a method wherein a rubber sheet containing synthetic rubber and a bubbling agent in a specific ratio is filled in a molding mold, it is blocked with a covering mold to be heated and pressed and then, it is cooled and thereafter, a metallic mold is released.

Patent **EP 81069** describes a web of a cross-linked plastic material foamed in a closed-cell structure or configuration, having substantially parallel upper and lower surfaces, wherein canals penetrate the foamed material and extend and open to at least one of said upper and lower surfaces, and wherein substances can be introduced into the canals to impart beneficial properties to the web of foamed material. The plastic material is polyethylene.

The patent **US 4559190** describes a process for the preparation of bodies of expanded cross-linked polyethylene, with closed cells.

The patent **EP 0646622** describes a plastic foam material composed of a blended resin composition which includes at least two thermoplastic resins and a silane-modified based resin. The blended resin composition consists essentially of 100 parts by weight of at least two thermoplastic resins, from about 1 to about 50 parts by weight of a silane-modified, cross-linked, thermoplastic resin; from about 0.001 to about 2.5 parts by weight of a crosslinking catalyst for use in a silane compound and from about 1 to about 20 parts by weight of a foaming agent. The thermoplastic resins are polyethylene, polypropylene or polystyrene.

Patent application **WO 9512481** describes a bilayer object comprising a lightened thermoplastic elastomer of the polyether amide type adhering by itself on a non lightened thermoplastic selected from polyether amides, polyether esters, polyurethanes. The bilayer product obtained by molding the lightened thermoplastic over the compact thermoplastic may be used in the fabrication of shoe soles. The density of the foam is 0.6 and is not crosslinked.

Patent application **WO200402729** describes waterproof/breathable moisture transfer liner for alpine, snowboard and hiking. It includes an inner liner selected from technically advanced fabrics which are carefully selected. A series of layers are provided outside the inner liner including foam material and insulated nonwoven layers, breathable membranes, a supportive mesh included in a moldable foam, or moldable a spacer material and an outer shell fabric. The foam is an open-cell foam.

None of the currently existing closed-cell foams have so low compressive strength, at given density, or such a low dynamic shear modulus. And none have so high water vapour transmission whilst having a closed-cell structure.

Inventors have now discovered a crosslinked foam made from a copolymer having polyamide blocks and polyether blocks. This foam has unexpected properties.

[Brief description of the invention]

The present invention concerns a crosslinked foam of a copolymer having polyamide blocks and polyether blocks and a density from 20 to 700 kg/m3.

Density is measured according to Method ISO 845. Advantageously the density is from 70 kg/m3 to 400 kg/m3.

Advantageously the cell size is from 0.05 to 2.0 mm, preferably from 0.1 mm to 1.0 mm. Advantageously the cells are closed. Preferably the foam does not undergo any further mechanical or thermal treatment (except to be thermoformed).

This foam has many advantages :

The compressive strength is from 90 to 170 kPa, preferably from 110 to 150 kPa (measured on foam of 240 kg/m3, at 25% deflection, method according to ISO 844).

The shore hardness 0 is from 20 to 34, preferably from 23 to 32 (measured on foam of 240 kg/m3, internal method) The thermal conductivity is from 0.038 to 0.058 W/m°K, preferably from 0.043 to 0.053 W/m°K (measured on foam of 240 kg/m3, method according to ISO 2581) The energy return is 28 to 40 cm, preferably 31 to 37 cm (measured on foam of 240 kg/m3, method according to ISO 8307).

The water vapour transmission is 500 to 10000 g/m2/day, preferably 1000 to 3500 g/m2/day (measured on foam of 240 kg/m3, 2.5 mm thickness, method according to ASTM E96 BW) provided there are enough hydrophilic polyether blocks.

[Detailed description of the invention]

**As regards the copolymer having polyamide blocks and polyether blocks**, these result from the copolycondensation of polyamide blocks containing reactive ends with polyether blocks containing reactive ends, such as, inter alia:

1) Polyamide blocks containing diamine chain ends with polyoxyalkylene blocks containing carboxylic chain ends.
2) Polyamide blocks containing dicarboxylic chain ends with polyoxyalkylene blocks containing diamine chain ends obtained by cyanoethylation and hydrogenation of aliphatic dihydroxylated alpha-omega polyoxyalkylenes known as polyether diols.
3) Polyamide blocks containing dicarboxylic chain ends with polyether diols, the products obtained in this particular case being polyetheresteramides. The copolymers used in the present invention are advantageously of this type.

The polyamide blocks containing dicarboxylic chain ends are derived, for example, from the condensation of $\alpha$, $\omega$-aminocarboxylic acids, lactams or dicarboxylic acids and diamines in the presence of a chain-limiting dicarboxylic acid.

The number-average molar mass of the polyamide blocks is between 300 and 15 000 and preferably between 600 and 5 000. The mass $M_n$ of the polyether blocks is between 100 and 6 000 and preferably between 200 and 3000.

The polymers containing polyamide blocks and polyether blocks may also comprise randomly distributed units. These polymers may be prepared by the simultaneous reaction of the polyether and the polyamide-block precursors. For example, polyetherdiol, a lactam (or an $\alpha$, $\omega$-amino acid) and a chain-limiting diacid may be reacted in the presence of a small amount of water. A polymer is obtained essentially containing polyether blocks, polyamide blocks of very variable length, and also the various reagents which have reacted randomly and which are distributed randomly in the polymer chain.

Whether these polymers containing polyamide blocks and polyether blocks are derived from the copolycondensation of polyamide and polyether blocks prepared beforehand or from a one-pot reaction, they have, for example, Shore D hardnesses which may be between 20 and 75 and advantageously between 30 and 70 and an intrinsic viscosity of between 0.8 and 2.5 measured in meta-cresol at 250°C for an initial concentration of 0.8 g/100 ml. The MFIs may be between 5 and 50 (235°C for a 1 kg load).

The polyetherdiol blocks are either used without modification and are copolycondensed with polyamide blocks containing carboxylic ends, or they are aminated in order to be converted into polyetherdiamines and condensed with polyamide blocks containing carboxylic ends. They may also be blended with polyamide precursors and a chain limiter to make polymers containing polyamide blocks and polyether blocks with randomly distributed units.

Polymers containing polyamide blocks and polyether blocks are disclosed in patents US 4 331 786, US 4 115 475, US 4 195 015, US 4 839 441, US 4 864 014, US 4 230 838 and US 4 332 920.

Three types of copolymer containing polyamide blocks and polyether blocks may be distinguished. According to a first type, the polyamide blocks containing dicarboxylic chain ends are derived, for example, from the condensation of $\alpha$, $\omega$-aminocarboxylic acids, of lactams or of dicarboxylic acids and diamines in the presence of a chain-limiting dicarboxylic acid. As an example of an $\alpha$, $\omega$-aminocarboxylic acid, mention may be made of aminoundecanoic acid, as examples of lactams, mention may be made of caprolactam and lauryllactam, as examples of dicarboxylic acids, mention may be made of adipic acid, decanedioic acid and dodecanedioic acid, and as an example of a diamine, mention may be made of hexamethylenediamine. Advantageously, the polyamide blocks are made of polyamide 12 or of polyamide 6.

According to a second type, the polyamide blocks result from the condensation of one or more $\alpha$, $\omega$-aminocarboxylic acids and/or of one or more lactams containing from 6 to 12 carbon atoms in the presence of a dicarboxylic acid containing from 4 to 12 carbon atoms, and are of low mass, i.e. they have an $\overline{M_n}$ from 400 to 1 000. As examples of $\alpha$, $\omega$-aminocarboxylic acids, mention may be made of aminoundecanoic acid and aminododecanoic acid. As examples of dicarboxylic acids, mention may be made of adipic acid, sebacic acid, isophthalic acid, butanedioic acid, 1,4-cyclohexyldicarboxylic acid, terephthalic acid, the sodium or lithium salt of sulphoisophthalic acid, dimerized fatty acids (these dimerized fatty acids have a dimer content of at least 98% and are preferably hydrogenated) and dodecanedioic acid HOOC-$(CH_2)_{10}$-COOH. Examples of lactams which may be mentioned are caprolactam and lauryllactam. Polyamide blocks obtained by condensation of lauryllactam in the presence of adipic acid or dodecanedioic acid and with an $\overline{M_n}$ of 750 have a melting point of 127-130°C.

According to a third type, the polyamide blocks result from the condensation of at least one α, ω-aminocarboxylic acid (or a lactam), at least one diamine and at least one dicarboxylic acid. The α, ω-aminocarboxylic acid, the lactam and the dicarboxylic acid may be chosen from those mentioned above. The diamine may be an aliphatic diamine containing from 6 to 12 atoms and may be arylic and/or saturated cyclic. Examples which may be mentioned are hexamethylenediamine, piperazine, 1-aminoethylpiperazine, bisaminopropylpiperazine, tetramethylenediamine, octamethylenediamine, decamethylenediamine, dodecamethylenediamine, 1,5-diaminohexane, 2,2,4-trimethyl-1,6-diaminohexane, diamine polyols, isophoronediamine (IPD), methylpentamethylenediamine (MPDM), bis(aminocyclohexyl)methane (BACM) and bis(3-methyl-4-aminocyclohexyl)methane (BMACM).

In the second and third types, the various constituents of the polyamide block and their proportion may be chosen in order to obtain a melting point of less than 150°C and advantageously between 90°C and 135°C.

Copolyamides with a low melting point are disclosed in patents US 4 483 975, DE 3 730 504 and US 5 459 230, and the same proportions of the constituents are adopted for the polyamide blocks.

Advantageously the copolymers having polyamide blocks and polyether blocks are made of: PA 12 and PEG, PA 12 and PTMG, PA 6 and PTMG, PA 6 and PEG, copolyamide blocks and PEG, copolyamide blocks and PTMG.

The polyether blocks may represent 5% to 85% by weight of the copolymer containing polyamide and polyether blocks. The polyether blocks may contain units other than ethylene oxide units, such as, for example, propylene oxide or polytetrahydrofuran (which leads to polytetramethylene glycol sequences). It is also possible to use simultaneously PEG blocks, i.e. those consisting of ethylene oxide units, PPG blocks, i.e. those consisting of propylene oxide units, and PTMG blocks, i.e. those consisting of tetramethylene glycol units, also known as polytetrahydrofuran. PPG or PTMG blocks are advantageously used. The amount of polyether blocks in these copolymers containing polyamide and polyether blocks is advantageously from 10% to 50% by weight of the copolymer and preferably from 35% to 50%.

The copolymers containing polyamide blocks and polyether blocks may be prepared by any means for attaching the polyamide blocks and the polyether blocks. In practice, two processes are essentially used, one being a 2-step process, the other a one-step process.

The 2-step process consists firstly in preparing polyamide blocks containing carboxylic ends by condensation of the polyamide precursors in the presence of a chain-limiting dicarboxylic acid and then, in a second step, in adding the polyether and a catalyst.

Once the polyamide containing carboxylic acid ends has been prepared, the polyether and a catalyst are then added. The polyether may be added in one or more portions, as may the catalyst.

The catalyst is defined as being any product which facilitates the bonding of the polyamide blocks and the polyether blocks by esterification. The catalyst is advantageously a derivative of a metal (M) chosen from the group formed by titanium, zirconium and hafnium.

This process and these catalysts are disclosed in patents US 4 332 920, US 4 230 838, US 4 331 786 US 4 252 920 JP 07145368A, JP 06287547A and EP 613919.

As regards the one-step process, all the reagents used in the two-step process, i.e. the polyamide precursors, the chain-limiting dicarboxylic acid, the polyether and the catalyst, are blended. These are the same reagents and the same catalyst as in the two-step process disclosed above. If the polyamide precursors are only lactams, it is advantageous to add a small amount of water.

The copolymer essentially has the same polyether blocks and the same polyamide blocks, but also a small portion of different reagents which have reacted randomly and which are distributed randomly in the polymer chain.

The higher the proportion of PEG blocks the higher the water vapor transmission rate.

It would not depart of the scope of the invention to use a blend of (i) a copolymer having polyamide blocks and PEG blocks and (ii) a copolymer having polyamide blocks and PTMG blocks.

It would not depart of the scope of the invention to use a blend of (i) a copolymer having polyamide blocks and polyether blocks and (ii) a polyamide. or a copolyamide. Advantageously the polyamide is of the same type as the polyamide of the polyamide block.

It would not depart of the scope of the invention to use a blend of (i) a copolymer having polyamide blocks and polyether blocks and (ii) a copolymer of ethylene with acetate or acrylate groups, preferably a copolymer of ethylene and alkyl (meth)acrylate. Eventually (ii) is functionalized. It could be a copolymer of ethylene-alkyl(meth)acrylate-maleic anhydride. This is described in EP 688 826.

**As regards the process to make the foam**, the following steps are advantageous :

1) Extrusion/kneading:

a) Extrusion and/or calendering as a film or a sheet, with or without cutting of the sheet.
b) Mixing/kneading amd possibly calendering to a sheet or a felt.

2) Crosslinking:

a) Chemical crosslinking: through addition of peroxide and/or silane during the extrusion/kneading phase.
b) Physical crosslinking: by electron beam or gamma radiation.
Both a) and b) alternatives can contain crosslinking co-agents or promoters as described in the literature to control the crosslinking network and density.

3 Foaming:

a) Through decomposition of an organic foaming agent added during the mixing phase, preferably azodicarbonamide.
b) Through release of supersaturated gas, preferably $CO_2$ or $N_2$, added in a high pressure autoclave, after extrusion but before expansion.
c) Through expansion of gas added directly during extrusion (usually as aid together with organic foaming agent as under a).

4) Expansion process:

a) In a horizontal oven. Free expansion.
b) In a vertical oven. Free expansion.
c) In a low pressure autoclave. Free expansion.
d) In a heated press. Constrained expansion.

5) Shape:

a) Roll foams
b) Batch foams

**As regards the uses**, they are connected to the following specific properties and advantages of the foam:

- Softness, low hardness, low compressive modulus
- High friction coefficient
- Low compression set
- High thermal insulation (low thermal conductivity)
- Good UV resistance
- Good chemical resistance against a great number of substances
- Prominent shape recovery
- Good printing results, even without surface treatment
- Excellent behaviour in ultrasonic and HF welding processes
- High water vapour transmission
- Can be flame laminated, pressformed, vacuumformed
- Can be adhesive coated
- Can be cut or die-cut
- Can be skived; not easy but possible
- Good wash resistance (at least to 60°C, incl. tumbler drying)
- High energy return (rebound height)
- High abrasion resistance
- Can be over-injected (with non-expanded copolymer having polyamide block and polyether block, or polyamide, or polyurethane or thermoplastic polyurethane) in usual injection moulding process, or in low pressure moulding process (whereby the molten mass is injected in the open mould, and the mould is closed after injection of the partially distributed resin).
- Can be extrusion coated to achieve a stiff/flexible thermoplastic complex.

| Uses | Relevant properties |
|---|---|
| Soccer balls | Energy return/Rebound |
| Sports gloves (goalkeepers, etc) | Antislip, energy return, roll product, easier |
| Immersion suits | Shape recovery, elasticity, thermal insulation, tear resistance |
| Golf clubs (grip) | Nice touch, abrasion resistance |
| Ski poles | As golf clubs |
| Sports bat grips | As golf clubs |
| Snowboard and windsurf pads | Antislip, surface resistance, easy to stick |
| Antislip coated tape (construction or automotive) | Antislip property, high surface tension, good touch |
| Lingerie articles (bra cup) | Elasticity, wash resistance, no crease, breathable |
| Parts of ski boots (ankle padding, tongue) | Low temperature resistance, flexibility |
| Mouse mats | Antislip feature, printability (no need of printed film) |
| Trays for objects in cars | Antislip, easy to stick |
| Gaskets | Conformability, temp. resistance, vibration |
| Flexographic printing rolls | Elasticity, energy return, fatigue resistance |
| Single and double side adhesive coated tapes | Conformability, elasticity, shape recovery Conformability, elasticity, shape recovery |
| Orthopaedic insoles/inlays | Mechanical properties, touch, fatigue resistance |
| Footwear insoles/insocks | Light weight, compression set |
| Footwear midsoles | Light weight, compression set |
| Footwear lining | Waterproof but water vapour breathable, thermoformable, thermal insulation |
| Heel inserts | |
| Transdermal pads | Water vapour breathable, skin friendly, elastic |
| Woundcare plasters | Water vapour breathable, skin friendly, elastic |
| Sportswear and garment lining garment lining | Waterproof but water vapour breathable, thermoformable, thermal insulation, light weight |
| Cushioning of seats of ski-lifts | Energy return, UV resistance (if not covered), |

[Examples]

a) Low Dynamic Shear Modulus of PEBAX® foam

-> very easy to get high elongation and "conformability". Following apparatus have been used:

## Fig 1

metal plate

hot melt

specimen

metal plate

side view    front view

Fig 2

b) Low dynamic shear modulus

**Dynamic Shear Modulus (MPa)**

On fig 2 "PEBAX® FOAM" means a foam according to the invention.

It has been made with a copolymer sold by Arkema (formely ATOFINA) under the trade name PEBAX

Fig 3

c) Low compression strength

**Compressive Strength**

Legend:
- High Tech PU foam - 475 kg/m3
- Crosslinked EVA foam - 250 kg/m3
- Crosslinked EVA foam - 143 kg/m3
- Pebax(R) Foam - 240 kg/m3
- Hi tech PU foam - 330 kg/m3
- Hi Tech PU foam - 250 kg/m3

Y-axis: Compressive Strength (kPa) — 0, 100, 200, 300, 400, 500, 600, 700, 800

X-axis: Deflection (%) — 0, 10, 20, 30, 40, 50, 60

fig 4

Shape recovery
(tensile test up to 1500 kPa, then back to 0 kPa,
measurement of remaining length)

d) High shape recovery:

e) High water vapour transmission

With the invented foam a material with high water vapour transmission can be obtained. Depending on the number of hydrophilic polyether blocks, the level of water vapour transmission (WVT) can vary between 500 and 10000 g/m2/day.

Examples of results obtained (measured according to ASTM E96E 38°C /90% RH):

- A foam of a copolymer having PA 12 blocks of $\overline{M}_n$ 600 and PTMG blocks of $\overline{M}_n$ 2000 with an area weight of 160 g/m2 has a WVT value of 1276 g/m2/d.;

- A foam of a copolymer having PA 12 blocks of $M_n$ 1000 and PTMG blocks of $M_n$ 1000 with an area weight of 180 g/m2 has a WVT value of 676 g/m2/d;

- A foam of a copolymer having PA 12 blocks of $\overline{M_n}$ 1500 and PEG blocks of $\overline{M_n}$ 1500 with an area weight of 460 g/m2 has a WVT value of 1400 g/m2/d;

- A foam of a copolymer having 6.10 /11 copolyamide blocks and PEG blocks (PEG is 40% by weight of the copolymer) with an area weight of 155 g/m2 has a WVT value of 2207 g/m2/d;

- A foam of (i) a copolymer having 6.10 /11 copolyamide blocks and PEG blocks (PEG is 40% by weight of the copolymer) blended with (ii) EVA in a weight ratio 70/30 with an area weight of 185 g/m2 has a WVT value of 1730 g/m2/d.

## Claims

1. Crosslinked foam of a copolymer having polyamide blocks and polyether blocks and a density from 20 to 700 kg/m3.

2. Foam according to claim 1 wherein the density is from 70 kg/m3 to 400 kg/m3.

3. Foam according to claim 1 or 2 wherein the cell size is from 0.05 to 2.0 mm.

4. Foam according to claim 3 wherein the cell size is from 0.1 mm to 1.0 mm.

5. Foam according to anyone of the preceding claims wherein the cells are closed.

6. Foam according to anyone of the preceding claims wherein no mechanical or thermal treatment has been done.

7. Foam according to anyone of the preceding claims wherein the water vapour transmission is from 500 to 10000 g/m2/day.

8. Foam according to claim 7 wherein the water vapour transmission is from 1000 to 3500 g/m2/day.

9. Foam according to anyone of the preceding claims wherein the copolymers having polyamide blocks and polyether blocks are made of : PA 12 and PEG, PA 12 and PTMG, PA 6 and PTMG, PA 6 and PEG, copolyamide blocks and PEG, copolyamide blocks and PTMG.

10. The use of the foam according to anyone of claims 1 to 9 to make soccer balls.

11. The use of the foam according to anyone of claims 1 to 9 to make sports gloves.

12. The use of the foam according to anyone of claims 1 to 9 to make immersion suits.

13. The use of the foam according to anyone of claims 1 to 9 to make golf club grips.

14. The use of the foam according to anyone of claims 1 to 9 to make ski poles.

15. The use of the foam according to anyone of claims 1 to 9 to make sports bat grips.

16. The use of the foam according to anyone of claims 1 to 9 to make snowboard or windsurf pads.

17. The use of the foam according to anyone of claims 1 to 9 to make antislip coated tape.

18. The use of the foam according to anyone of claims 1 to 9 to make lingerie articles.

19. The use of claim 18 wherein the lingerie articles are bra cups.

20. The use of the foam according to anyone of claims 1 to 9 to make parts of ski boots.

**21.** The use of the foam according to anyone of claims 1 to 9 to make mouse pads.

**22.** The use of the foam according to anyone of claims 1 to 9 to make trays for objects.

**23.** The use of the foam according to anyone of claims 1 to 9 to make gaskets.

**24.** The use of the foam according to anyone of claims 1 to 9 to make flexographic printing rolls.

**25.** The use of the foam according to anyone of claims 1 to 9 to make single or double adhesive coated tapes.

**26.** The use of the foam according to anyone of claims 1 to 9 to make orthopaedic insoles or inlays.

**27.** The use of the foam according to anyone of claims 1 to 9 to make footwear insoles or insocks.

**28.** The use of the foam according to anyone of claims 1 to 9 to make footwear midsoles.

**29.** The use of the foam according to anyone of claims 1 to 9 to make footwear linings.

**30.** The use of claim 29 wherein the footwear linings are watertight and water vapour breathable.

**31.** The use of the foam according to anyone of claims 1 to 9 to make footwear shafts.

**32.** The use of the foam according to anyone of claims 1 to 9 to make heel inserts.

**33.** The use of the foam according to anyone of claims 1 to 9 to make transdermal pads.

**33.** The use of the foam according to anyone of claims 1 to 9 to make woundcare plasters.

**34.** The use of the foam according to anyone of claims 1 to 9 to make sportswear garments or linings.

**35.** The use of the foam according to anyone of claims 1 to 9 to make cushioning of seats of ski lifts.

**European Patent Office**

**EUROPEAN SEARCH REPORT**

Application Number

EP 04 02 4833

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 009, no. 171 (C-291), 16 July 1985 (1985-07-16) & JP 60 042432 A (NIPPON STYREN PAPER KK), 6 March 1985 (1985-03-06) * abstract * | 1-35 | C08J9/00 |
| X,D | WO 95/12481 A (ELF ATOCHEM S.A; AUBER, YVES; TRON, LOIC) 11 May 1995 (1995-05-11) * page 3, column 34 - page 4, column 17 * * page 3, line 20 - line 25 * * examples 1,2,6,8,10 * | 1-35 | |
| A | PATENT ABSTRACTS OF JAPAN vol. 009, no. 138 (C-286), 13 June 1985 (1985-06-13) & JP 60 026029 A (NIPPON STYREN PAPER KK), 8 February 1985 (1985-02-08) * abstract * | 1-35 | |
| A | FR 2 823 699 A (C.F. GOMMA BARRE THOMAS) 25 October 2002 (2002-10-25) * page 11, line 16 - line 18 * * table 1 * | 1-35 | TECHNICAL FIELDS SEARCHED (Int.Cl.7) C08J |

The present search report has been drawn up for all claims

| Place of search | Date of completion of the search | Examiner |
|---|---|---|
| Munich | 24 March 2005 | Vaccaro, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 04 02 4833

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2005

| Patent document cited in search report | | Publication date | Patent family member(s) | | Publication date |
|---|---|---|---|---|---|
| JP 60042432 | A | 06-03-1985 | JP | 1732071 C | 17-02-1993 |
| | | | JP | 4017977 B | 26-03-1992 |
| WO 9512481 | A | 11-05-1995 | AU | 674465 B2 | 19-12-1996 |
| | | | AU | 8063594 A | 23-05-1995 |
| | | | CA | 2152510 A1 | 11-05-1995 |
| | | | CN | 1122583 A | 15-05-1996 |
| | | | EP | 0679119 A1 | 02-11-1995 |
| | | | WO | 9512481 A1 | 11-05-1995 |
| | | | JP | 8505333 T | 11-06-1996 |
| JP 60026029 | A | 08-02-1985 | NONE | | |
| FR 2823699 | A | 25-10-2002 | FR | 2823699 A1 | 25-10-2002 |

EPO FORM P0459

For more details about this annex : see Official Journal of the European Patent Office, No. 12/82